# EUROPÄISCHE PATENTANMELDUNG

(11) **EP 0 997 220 A2**
(43) Veröffentlichungstag der Anmeldung: **03.05.2000**
(21) Anmeldenummer: 99120764.8
(22) Anmeldetag: 20.10.1999
(51) Int. Cl.: B23H 7/26

(54) **Werkzeughalter für eine Werkzeugmaschine**

(30) Priorität: 27.10.1998 DE 19849445
(71) Anmelder: System 3R International AB, 162 50 Vällingby (SE)
(72) Erfinder: Nordquist, Hakon, 187 75 Täby (SE)
(74) Vertreter: Zinngrebe, Horst, Dr.rer.nat.

(57) **Zusammenfassung**

Beschrieben wird ein an eine Werkzeugmaschine zur insbesondere elektroerosiven Werkstückbearbeitung in vorgegebener exakter Position anspannbarer Werkzeughalter, an welchem ein Werkzeug befestigt werden kann und der eine Referenzflächen aufweisende Kupplungsfläche besitzt, wobei in die Kupplungsfläche wenigstens zwei nicht-fluchtende Nuten eingebracht sind und jede Nut von zwei einander gegenüberliegenden, senkrecht zur Kupplungsfläche federnden und mit der Kupplungsfläche bündigen Stegen derart teilweise überdeckt ist, daß zwischen den freien Kanten ein sich in Richtung der Nut erstreckender Schlitz vorgegebener Breite bleibt. Damit die Positioniergenauigkeit des Werkzeughalters in der x-y-Ebene insbesondere nach sehr häufigen Anspann- und Lösevorgängen weiter erhöht wird, ist vorgesehen, daß die beiden Stege mit einer sich in die Nut erstreckenden Brücke verbunden sind.

## Beschreibung

Die Erfindung betrifft einen an ein Futter einer Werkzeugmaschine zur insbesondere elektroerosiven Werkstückbearbeitung in vorgegebener exakter Position anspannbaren Werkzeughalter, an welchem ein Werkzeug befestigt werden kann und dessen Oberseite mit z-Referenzelementen für die Positionierung in z-Richtung versehen ist und in den von seiner Oberseite aus wenigstens zwei nicht-fluchtende Nuten eingebracht sind, wobei an jeder Nut zwei gegenüberliegende sich teilweise über die Nut erstreckende und in z-Richtung elastische x-y-Referenzelemente ausgebildet sind.

Der aus der europäischen Patentanmeldung 255 042 bekannte Elektrodenhalter kann an das mit axial vorstehenden Prismenzapfen sowie mit axial vorstehenden Abstandszapfen ausgerüstete Futter einer Senkerodiermaschine angespannt werden, wobei die Prismenzapfen beim Anspannen in die Schlitze zwischen den Lippen soweit eindringen, bis die Abstandszapfen auf den z-Referenzelementen aufliegen. Die x-y-Referenzelemente liegen dabei kraftschlüssig an den prismatischen Seitenflächen der Prismenzapfen an und bewirken dadurch die exakte Positionierung des Werkstückhalters innerhalb der zur z-Richtung senkrechten x-y-Ebene relativ zur Senkerodiermaschine. Die Anlage der Abstandszapfen an den flächigen z-Referenzelementen bestimmt die Lage des Werkzeughalters in z-Richtung.

In dem Dokument EP-A-403 428 wird eine Vorrichtung zum positionsdefinierten Aufspannen eines Werkstückes auf einem Bearbeitungstisch einer Werkzeugmaschine beschrieben. Der Bearbeitungstisch ist mit mindestens zwei im Abstand zueinander angeordneten Tragkörpern versehen, die vier kreuzweise angeordnete Zentrierzapfen aufweisen. Eine Werkstückaufnahme besitzt zwei Zentrierorgane, von denen eines mit vier korrespondierend zu den Zentrierzapfen angeordneten Zentrierschlitzen versehen ist. Dazu dient eine Zentrierplatte, bei der gegenüberliegende in z-Richtung elastische Stege jedes von vier kreuzweise angelegten Stegpaaren durch einen den Zentrierschlitz aufweisenden verdickten zentralen Abschnitt verbunden sind. Die Zentrierplatte ist auf die Werkstückaufnahme aufgeschraubt, wobei die Köpfe der zugehörigen Schrauben mit z-Referenzflächen versehen sind. Diese Verschraubung hat eine Instabilität der Zentrierplatte in Umfangsrichtung bezüglich der Werkstückaufnahme zur Folge, die sich vor allem nach längerem Gebrauch störend bemerkbar macht.

Der Erfindung liegt die Aufgabe zugrunde, die Positioniergenauigkeit des Werkzeughalters in der x-y-Ebene insbesondere nach sehr häufigen Anspann- und Lösevorgängen weiter zu erhöhen.

Dazu sieht die Erfindung bei dem eingangs genannten Werkzeughalter vor, daß die x-y-Referenzelemente jeder Nut durch eine in die Nut reichende Brücke verbunden sind. Die Brücke erhöht die Steifheit der x-y-Referenzelemente in Umfangsrichtung, sodaß sie auch aus einem relativ weich-elastischen Material, beispielsweise einem entsprechenden Federstahl, bestehen können, ohne Genauigkeitseinbußen hinnehmen zu müssen. Die Wirkung der Brücke macht sich vor allem dann vorteilhaft bemerkbar, wenn in Weiterbildung der Erfindung die x-y-Referenzelemente in Anpassung an die Prismenflächen der Prismenzapfen mit Schrägflächen versehen sind. Es empfiehlt sich weiter, die Brücke an der Unterseite der Stege in der Nähe ihrer oder an ihren freien Kanten anzubringen. In einer besonders einfachen Ausführungsform hat die Brücke U-förmigen Querschnitt. Die Erfindung erweist sich für den Fall als besonders günstig, daß zwei kreuzweise angelegte Nutenpaare vorgesehen sind, wobei die beiden Nuten jedes Paares fluchten.

Im übrigen sind vorteilhafte Ausgestaltungen der Erfindung in den Unteransprüchen angegeben. Die Erfindung wird nachstehend anhand der in der beigefügten Zeichnung dargestellten Ausführungsbeispiele im einzelnen beschrieben. Es zeigen:
Figur 1 eine schematische Seitenansicht des unteren Teils eines Spannfutters mit vorgehaltenem Elektrodenhalter,
Figur 2 eine schematische Ansicht eines Details aus Figur 1 in vergrößertem Maßstab bei an das Spannfutter angespanntem Elektrodenhalter,
Figur 3 eine der Figur 1 ähnliche Ansicht einer weiteren Ausführungsform des Elektrodenhalters;
Figur 4 einen schematischen Ausschnitt aus dem Elektrodenhalter nach Figur 5 und
Figur 5 eine schematische Draufsicht auf eine dritte Ausführungsform eines Elektrodenhalters.

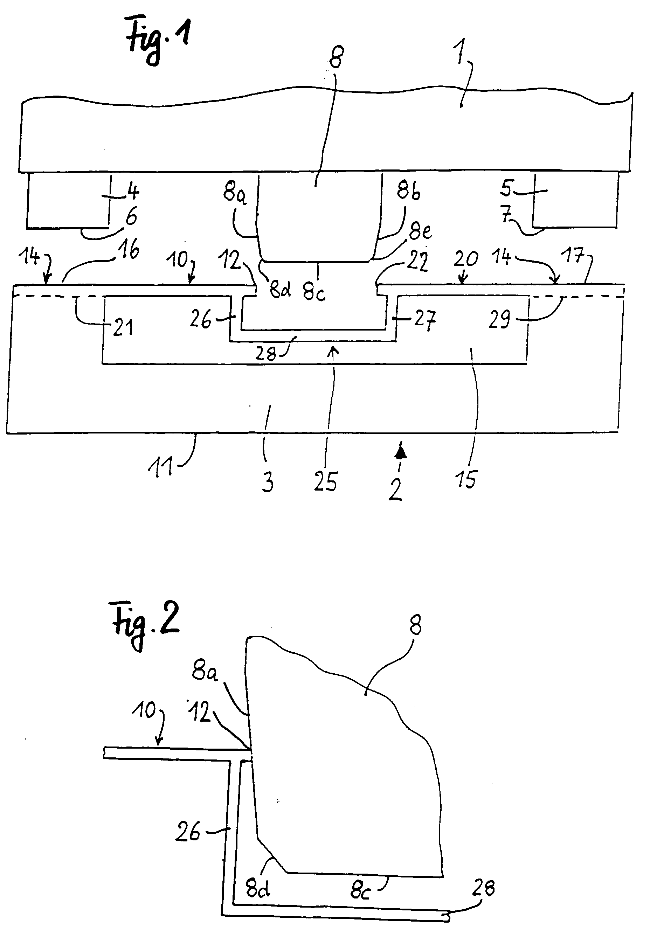

Zum besseren Verständnis der Erfindung wird auf das in der europäischen Patentanmeldung 255 042 beschriebene Ausführungsbeispiel Bezug genommen, in deren Figuren 1 bis 7 ein zur Aufnahme einer Elektrode als Werkzeug geeigneter Halter dargestellt ist.

Die Figur 1 zeigt in schematischer Seitenansicht den unteren Teil eines Futters 1 einer Senkerodiermaschine sowie darunter einen Elektrodenhalter 2. Nicht dargestellt sind Mittel zum Anspannen des Elektrodenhalters 2 an das Futter 1 sowie zum Lösen des Elektrodenhalters 2 vom Futter 1. Wie aus der genannten Patentanmeldung hervorgeht, gehören zu diesen Mitteln beispielsweise eine im Futter 1 beherbergte und durch Druckluft steuerbare Spanneinrichtung zum Ergreifen eines mit dem Elektrodenhalter 2 kuppelbaren Zugbolzens.

Von der freien Unterseite des Futters stehen zwei in der x-y-Ebene beabstandete Abstandszapfen 4, 5 mit freien in der gemeinsamen x-y-Ebene liegenden Referenzgegenflächen 6, 7 vor. Zwischen den beiden Abstandszapfen 4, 5 steht aus der Unterseite ein sich in axialer oder z-Richtung geringfügig länger als die Abstandszapfen 4, 5 erstreckender Prismenzapfen 8 vor, der am freien Ende mit symmetrisch zur z-Achse ausgebildeten, relativ zur x-y-Ebene schrägen Prismenflächen 8a und 8b versehen ist.

Der Elektrodenhalter 2 besitzt einen aus üblichem Werkzeugstahl gefertigten Korpus 3, an dessen Unterseite 11 eine nicht dargestellte Elektrode oder ein sonstiges Werkzeug oder auch Werkstück durch Anschrauben oder Anlöten befestigt werden kann. Die beim Anspannen dem Futter gegenüberliegende Oberseite des Elektrodenhalters ist mit mit den Referenzgegenflächen 6, 7 beim Anspannen zusammenwirkenden z-Referenzflächen 16, 17 versehen. Das Anspannen des Elektrodenhalters 2 an das Futter 1 ist beendet, wenn die Referenzgegenflächen 6, 7 auf den z-Referenzflächen 16, 17 aufsitzen. Der Elektrodenhalter 2 ist dann bezüglich des Futters 1 in axialer Richtung genau positioniert. Die Referenzflächen 16, 17 sind in den Eckbereichen des in Draufsicht quadratischen Elektrodenhalters 2 ausgebildet, wobei die Abstandszapfen 4, 5 entsprechend angeordnet sind.

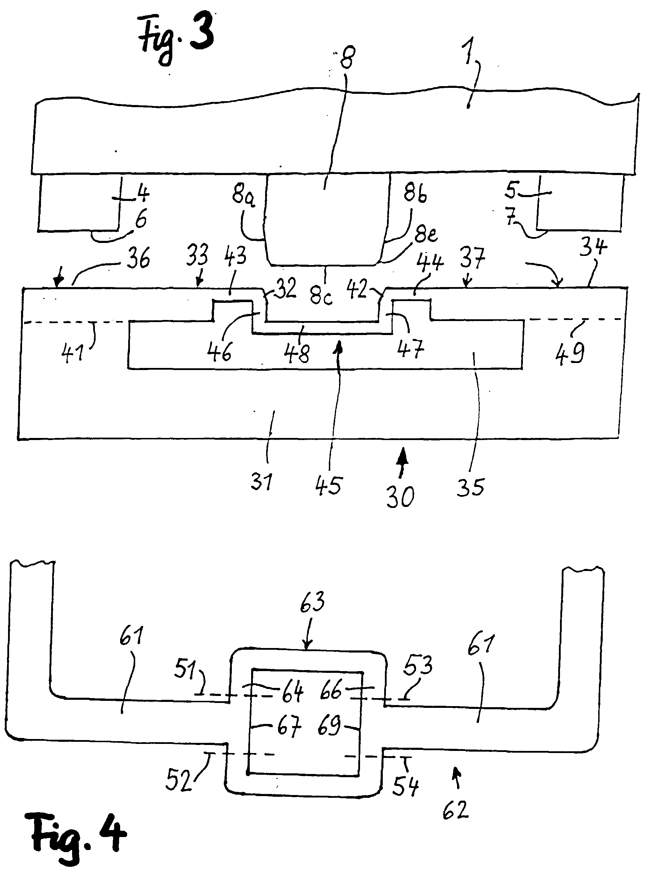

In den Korpus 3 ist von oben eine sich senkrecht zur Ebene der Figur 1 erstreckende Nut 15 eingearbeitet, die von zwei einander gegenüberliegenden Stegen 10, 20 bis auf einen zwischen ihren beiden freien Kanten 12, 22 verbleibenden Schlitz überdeckt ist. Die Kanten 12, 22 können in Anpassung an die Prismenflächen 8a, 8b entsprechend abgeschrägt oder angefast sein, was besonders deutlich in Figur 3 bei 32, 42 zu erkennen ist. Die Breite des Schlitzes ist einerseits kleiner als die in Breitenrichtung genommene Dicke des Prismenzapfens 8 und andererseits größer als der zwischen den Prismenflächen 8a, 8b verbleibende Teil der freien Stirnfläche 8c des Prismenzapfens 8 unter Einschluß der das Einführen des Prismenzapfens 8 in den Schlitz erleichternden beiderseitigen Fasen 8d und 8e. Während des Anspannens des Elektrodenhalters 2 an das Futter 1 dringt daher der Prismenzapfen 8 mit seinen Prismenflächen 8a, 8b in den Schlitz zwischen die Kanten 12, 22 ein, welche sich dabei an die Prismenflächen 8a, 8b kraftschlüssig (oder bei Ausbildung nach Figur 3 flächig), den Elektrodenhalter in der x-y-Ebene positionierend, anlegen, wie Figur 2 für die Lippenkante 12 und die Prismenfläche 8a zeigt.

Eine im Querschnitt U-förmige Brücke 25 besitzt zwei aufrecht stehende Schenkel 26, 27, von denen der Schenkel 26 an die Unterseite des Steges 10 in der Nähe seiner Kante 12 und der Schenkel 27 an die Unterseite des Steges 20 in der Nähe seiner Kante 22 angeschweißt ist. Natürlich kann jeder Schenkel 26, 27 auch in anderer Weise an dem zugehörigen Steg 10, 20 befestigt sein. Der Boden 28 der Brücke 25 überbrückt in einem durch die Länge der gleich langen Schenkel 26, 27 definierten Abstand den Schlitz innerhalb der Nut 15. Die Länge der Schenkel 26, 27 ist so gewählt, daß für den Prismenzapfen 8 bei seinem Eindringen in den Schlitz während des Anspannens genügend Raum zur Verfügung steht.

In der in der Figur 1 dargestellten Ausführungsform bilden die Stegen 10, 20 und die Brücke 25 zusammen mit dem Korpus 3 ein einteiliges Ganzes, beispielsweise ein Gußstück, und sind, um ihre axiale Elastizität sicherzustellen, hinreichend dünn ausgeführt, wobei die Nut 15 eine wesentlich kleinere Breite als dargestellt hat. In einer alternativen Ausführungsform können die Stege 10, 20 und die Brücke 25 aus Federstahl bestehen, wobei die Stege am brückenfernen Ende auf den Korpus 3 bei 21, 29 aufgeschweißt sind. Die Oberseite der Stege bilden dabei die z-Referenzflächen 16, 17.

Die Erfindung ist nicht darauf beschränkt, daß die Schenkel 26, 27 nur in der Nähe der Lippenkanten 12, 22 mit den Lippen 10, 20 verbunden sind. Eine gleich gute Steifheit der Lippen in Umfangsrichtung erhält man, wenn die Schenkel 26, 27 direkt an den Lippenkanten 12, 22 befestigt sind und nicht, wie dargestellt, mit Abstand zu diesen.

Vorstehend wurde die Erfindung an einer einzigen Nut 15 mit einem Paar gegenüberliegenden und die Nut teilweise überdeckenden Stegen 10, 20 beschrieben. Aus der erwähnten Patentanmeldung geht hervor, daß in den Elektrodenhalter 2 zwei kreuzweise angelegte Nutenpaare eingeschnitten sein können, wobei jede Nut hier mit einem Stegpaar versehen ist und die Stegkanten der Nuten je eines Nutenpaares fluchten. Es liegt daher im Rahmen der Erfindung jede der genannten Nuten mit ihrem Stegpaar so mit einer Brücke zu versehen, wie das oben anhand der Nut 15 erläutert worden ist.

Bei der in Figur 3 dargestellten Ausführungsform der Erfindung ist zunächst das Futter 1 wie oben beschrieben unverändert. Der in Draufsicht quadratische Elektrodenhalter 30 weist eine in seinen Korpus 31 eingearbeitete Nut 35 auf, über welche sich von beiden gegenüberliegenden Seiten ausgehende Stege 33, 37 teilweise erstrecken. Der Steg 33 ist bei 41 und der Steg 37 ist bei 49 auf die die Nut 35 seitlich begrenzenden Korpusteile aufgeschweißt. Auf der Oberseite der mit den Korpusteilen verbundenen Stegabschnitte sind z-Referenzflächen 36, 34 ausgebildet, die beim Anspannen des Elektrodenhalters 30 an das Futter 1 an die Referenzgegenflächen 6 bzw. 7 zur Anlage kommen. Die über der Nut 35 befindlichen Enden der Stege 33, 37 sind durch eine Brücke 45 zweckmäßig aus Federstahl verbunden, wobei das Material der Brücke 45 wie dargestellt höchstens eine halb so große Stärke wie die der Stege 33, 37 besitzt.

Die Brücke 45 besteht aus einem Boden 48, aus dessen beiden den Stegen 33, 37 zugewandten Enden sich je ein Schenkel 46, 47 erhebt. Jeder Schenkel 46, 47 geht mittels je eines Zwischenstückes 43, 44 in den angrenzenden Steg 33, 37 über. Boden 48, Schenkel 46, 47 und Zwischenstücke 43, 44 haben im wesentlichen gleiche Materialstärke. Der Übergang vom Zwischenstück 43 zum Schenkel 46 ist mit einer Schrägfläche 32 versehen, deren Neigung der Prismenfläche 8a angepaßt ist. Entsprechend ist der Übergang von dem Zwischenstück 44 zum Schenkel 47 mit einer der Prismenfläche 8b angepaßten Schrägfläche 42 versehen. Beim Eindringen des Prismenzapfens 8 zwischen die Schenkel 46, 47 beim Anspannen kommen daher die Prismenflächen 8a und 8b in flächige Anlage an die Schrägflächen 32 bzw. 42. Dabei bleibt die axiale Elastizität ganz auf die Brücke 45 beschränkt, da die Stege 33, 37 wegen ihrer erhöhten Materialstärke praktisch nicht einfedern können

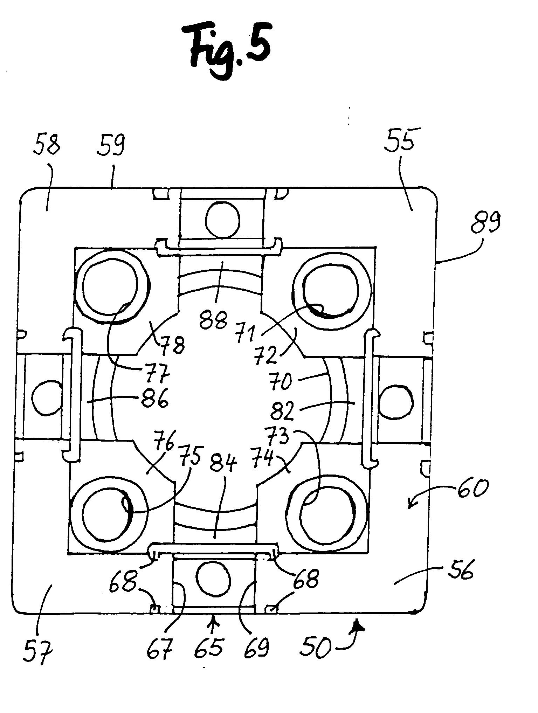

In den Figuren 4 und 5 ist eine Ausführungsform der Erfindung dargestellt, bei der die Brücke und die Stege aus einem Stück beispielsweise eines Federstahlstreifens gefertigt sind. Der Werkstück- oder Elektrodenhalter 50 von quadratischem Umriß besitzt zunächst in üblicher Weise eine mittige Durchgangsbohrung 70 mit in sie teilweise hineinragenden vier Arretierabschnitten 72, 74, 76, 78, welche, wie in der Schrift EP-A-255 042 im einzelnen beschrieben, zur festen jedoch lösbaren Kopplung eines nicht dargestellten Zugbolzens dienen. Ferner sind radial außerhalb der Durchgangsbohrung 70 in der Nähe der Arretierabschnitte vier weitere Durchgangsbohrungen 71, 73, 75, 77 für Bolzen vorgesehen, mit denen ein Werkstück oder eine Elektrode an der Unterseite des Werkstückhalters 50 befestigt werden kann.

Ferner ist von der Oberseite des Elektrodenhalters 50 aus in dessen Korpus ein Kreuz von vier Nuten 82, 84, 86, 88 eingeschnitten, von denen je zwei gegenüberliegende fluchten und parallel zu einer Seitenkante 59 bzw 89 sowie mittig zur benachbarten Seitenkante 89 bzw. 59 des Elektrodenhalters 50 liegen und von denen sich je eine Nut zwischen je zwei benachbarten der weiteren Durchgangsbohrungen 71, 73, 75, 77 erstreckt. Zur jeweiligen Außenseite des Elektrodenhalters 50 hin ist die jeweils zugehörige Nut seitlich erweitert, um Platz für jeweils eine noch zu beschreibende Brücke und ihr eventuelles Einfedern in z-Richtung zu lassen.

An den vier Eckbereichen des Elektrodenhalters 50 ist auf seine Oberseite ein zusammenhängender Blechstreifen 60 aufgeschweißt, der sich längs des Außenrandes des Halters erstreckt und von dem ein Abschnitt 62 vor seiner Zurüstung zum Aufbringen auf den Elektrodenhalter 50 in Figur 4 gezeigt ist. Die Außenabmessungen des fertigen Blechstreifens 60 sind daher gleich denjenigen des Elektrodenhalters 50. Ferner wird der Blechstreifen 60 von vier gleichen im wesentlichen geradlinigen Abschnitten gebildet, von denen einer in Figur 4 mit 61 bezeichnet ist. In der Mitte des zunächst ebenen Abschnittes 61 besitzt dieser eine sich zu beiden Seiten erstreckende rechtwinkelige Erweiterung, aus der mittig ein rechtwinkeliges Blechstück auszustanzen ist. Nach dem Ausstanzen verbleibt ein Rahmen 63, dessen gegenüberliegende und sich quer zum Abschnitt 61 erstreckende Teile 64, 66 zur Bildung der erwähnten Brücke 65 längs den in Figur 4 gestrichelt eingezeichneten Linien 51, 52, 53, 54 senkrecht unter die Ebene der Figur 4 abgebogen werden. Der in dieser Weise an seinen vier Abschnitten vorbereitete Blechstreifen 60 wird anschließend wie erwähnt auf den Elektrodenhalter 50 aufgeschweißt. Jede der vier Brücken erstreckt sich dann in die seitlichen Erweiterungen der jeweils zugehörigen Nut, beispielsweise die Brücke 65 in die Erweiterung 68 der Nut 84. Die sich zum jeweiligen Abschnitt, etwa zum Abschnitt 61, quer erstreckenden, gegenüberliegenden Kanten der Ausstanzung, etwa die Kanten 67, 69, kommen beim Anspannen des Elektrodenhalters 50 an das Futter 1 zur Anlage an die Prismenflächen 8a bzw. 8b und sind somit x-y-Referenzen für die Ausrichtung des Elektrodenhalters 50 in x- und in y-Richtung. Die z-Referenzelemente bilden die in einer Ebene und in den Eckbereichen des Elektrodenhalters 50 liegenden Oberseiten 55, 56, 57, 58 des Blechstreifens 60, auf denen die entsprechenden vier z-Referenzgegenelemente am Futter 1, in Figur 3 mit 6 und 7 bezeichnet, nach dem Anspannen aufliegen.

Die zuletzt beschriebene Ausführungsform der Erfindung empfiehlt sich durch die Einfachheit ihrer Herstellung.

## Patentansprüche

1. An ein Futter (1) einer Werkzeugmaschine zur insbesondere elektroerosiven Werkstückbearbeitung in vorgegebener exakter Position anspannbarer Werkzeughalter (2, 30, 50), an welchem ein Werkzeug befestigt werden kann und dessen Oberseite mit z-Referenzelementen (16, 17; 36, 34; 55, 56, 57, 58) für die Positionierung in z-Richtung versehen ist und in den von seiner Oberseite aus wenigstens zwei nicht-fluchtende Nuten (15, 35; 82, 84, 86, 88) eingebracht sind, wobei an jeder Nut zwei gegenüberliegende, sich teilweise über die Nut erstreckende und in z-Richtung elastische x-y-Referenzelemente (12, 22; 32, 42; 67, 69) ausgebildet sind, dadurch gekennzeichnet, daß die x-y-Referenzelemente jeder Nut durch eine in die Nut reichende Brücke (25, 45, 65) verbunden sind.

2. Halter nach Anspruch 1, dadurch gekennzeichnet, daß die Brücke (25, 45, 65) U-förmigen Querschnitt hat.

3. Halter nach Anspruch 1 oder 2, dadurch gekennzeichnet, daß die Brücke an der Unterseite von Stegen (10, 20) in der Nähe deren freier Kanten (12, 22) oder an deren freien Kanten (Figur 3) befestigt ist.

4. Halter nach Anspruch 3, dadurch gekennzeichnet, daß am Übergang der Brücke zu den Stegen Schrägflächen (32, 42) zur flächigen Anlage an Prismenflächen (8a, 8b) ausgebildet sind, welche an am Futter (1) befestigten Pfosten (8) vorhanden sind.

5. Halter nach einem der vorstehenden Ansprüche, dadurch gekennzeichnet, daß die Brücke aus einem anderen Werkstoff, beispielsweise Federstahl, besteht als der Korpus (3, 31) und gegebenenfalls die Stege (10, 20; 33, 37).

6. Halter nach einem der Ansprüche 3 bis 5, dadurch gekennzeichnet, daß die Stege (33, 37) eine wesentlich größere Stärke haben als das Material der Brücke (45).

7. Halter nach einem der vorstehenden Ansprüche, dadurch gekennzeichnet, daß jede Nut im Bereich der Brücke seitlich erweitert ist (bei 68), um ein Einfedern der Brücke zu ermöglichen.

8. Halter nach einem der vorstehenden Ansprüche, dadurch gekennzeichnet, daß die Brücke (65) aus einem einteiligen Blechstreifen (60) bespielsweise aus Federstahl gebildet ist, welcher auf die Oberseite des Elektrodenhalters (50) aufgebracht ist.

9. Halter nach Anspruch 8, dadurch gekennzeichnet, daß die Brücke durch Umbiegen von sich quer zu dem Blechstreifen erstreckenden Seitenteilen (64, 66) eines Rahmens (63) gebildet ist, welcher nach Ausstanzen oder dergleichen Herausnahme eines Blechteils aus einer seitlichen Erweiterung des Blechstreifens entstanden ist.

10. Halter nach einem der Ansprüche 8 oder 9, dadurch gekennzeichnet, daß der Blechstreifen sich längs des Umrisses des Elektrodenhalters erstreckt und vier zusammenhängende Abschnitte (61) aufweist, von denen je einer parallel zu und an einer der vier Seitenkanten (59, 89) des Elektrodenhalters (50) verläuft und mittig eine der Brücken (65) besitzt.

11. Halter nach einem der vorstehenden Ansprüche, dadurch gekennzeichnet, daß zwei kreuzweise angelegte Nutenpaare (82, 86; 84, 88) vorgesehen sind, wobei die Nuten je eines Nutenpaares fluchten, sich parallel zu einer der Seitenkanten (59, 89) des Elektrodenhalters (50) erstrecken und mittig zur benachbarten Seitenkante (89, 59) liegen.
